# EUROPEAN PATENT SPECIFICATION

(11) **EP 1 761 602 B1**
(45) Date of publication and mention of the grant of the patent: **27.06.2012**
(21) Application number: 05757185.3
(22) Date of filing: 19.05.2005
(51) Int. Cl.: C08L 53/02, C08F 297/04

(54) **ELASTOMERIC MONOALKENYL ARENE-CONJUGATED DIENE BLOCK COPOLYMERS**
ELASTOMERE BLOCKCOPOLYMERE AUF BASIS VON MONOALKENYLARENEN UND KONJUGIERTEN DIENEN
COPOLYMERES SEQUENCES DE DIENES CONJUGUES A DES ARENES DE MONOALCENYL ELASTOMERES

(30) Priority: 22.06.2004 US 582050 P
(43) Date of publication of application: 14.03.2007
(73) Proprietor: Trimurti Holding Corporation, Tortola (VG)
(72) Inventor: TONEY, Kenneth, A., Midland, MI 48642 (US)
(74) Representative: Rutherford, Claire
(86) International application number: PCT/US2005/017794
(87) International publication number: WO 2006/007154

(56) References cited:
- EP-A- 1 233 028
- WO-A-00/20207
- WO-A-02/00806
- WO-A-02/22733
- WO-A-96/16122
- WO-A-2004/104095
- US-A- 4 663 220
- US-A- 4 732 928
- US-A- 4 874 447
- US-A- 5 260 366
- US-A- 5 532 315
- US-A- 5 750 623
- US-A1- 2002 132 922
- US-A1- 2003 181 584
- US-B1- 6 576 686

## Description

This invention relates generally to elastomeric monoalkenyl arene-conjugated diene block copolymers, particularly to elastomeric monoalkenyl arene-conjugated diene-monoalkenyl arene block copolymers. This invention more particularly relates to elastomeric styrene-isoprene block copolymers, still more particularly to elastomeric styrene-isoprene-styrene (SIS) triblock copolymers, elastomeric styrene-isoprene-styrene-isoprene (SISI) tetrablock copolymers, elastomeric styrene-isoprene-styrene-isoprene-styrene (SISIS) pentablock copolymers, elastomeric styrene-isoprene-styrene-isoprene-styrene-isoprene (SISISI) hexablock copolymers and elastomeric copolymers containing alternating sequences of styrene and isoprene containing seven or more sequences (for example, heptablock and higher copolymers). This invention especially relates to those block copolymers having a minimum capillary spinning temperature or MCST (defined below) that is no greater than, and preferably below, their degradation temperature and, as such, are suitable for conversion into fibers at the MCST via spunbond procedures, meltblown processes or both.

Non-woven fabrics produced from a spunbond thermoplastic polymer (for example, polypropylene) tend to be porous, but non-elastic. In other words, the fabrics do not stretch in response to an applied tensile force and then recover to their original shape or configuration or nearly so. Such non-elastic fabrics tend to resist tensile forces up to a yield point after which they either stretch irreversibly, such as by way of stretched or broken bonds between contiguous fibers, or tear. Non-woven fabrics produced from such a thermoplastic polymer via a meltblowing process or with a combination of melt blowing and spun bonding suffer a similar irreversible stretching or tearing.

One known technique of imparting a degree of elasticity to fibrous materials involves puckering or crimping the fibers. United States Patent (USP) 3,595,731 teaches preparation of a bonded fibrous material containing crimped fibers by forming a fibrous structure containing potentially crimpable fibers that comprise two fiber-forming components, one of which is potentially adhesive, and subsequently rendering the potentially adhesive component adhesive. USP 4,551,378 teaches preparation of a nonwoven stretch fabric from bicomponent fibers bonded together by fusion of fibers at points of contact and thermally crimped in situ in the web.

WO 00/20207 teaches elastic laminates that are elastically extensible in at least one direction. The laminates include an elastomeric material layer formed from a polystyrene thermoplastic elastomer, such as a styrene-isoprene-styrene thermoplastic elastomer, and a nonwoven layer that includes polyester fibers. The elastomeric layer may be in the form of a woven or non-woven material.

In an attempt to simplify preparation of an elastic non-woven material or structure, one may elect to subject an elastomeric polymer to fiber-forming processes such as spunbonding, melt spinning or a combination of the two. Unfortunately, temperatures at which conventional elastomeric polymers may be spunbond or meltspun tend to exceed a temperature at which such polymers begin to undergo degradation or decomposition.

USP 5,162,074 teaches, at column 4, lines 52-59, that melt spinning is only available for a polymer having a melting point temperature less than its decomposition point temperature. Nylon and polypropylene are among polymers that can be spun. Other polymers, such as acrylics, cannot be melted without blackening and decomposing.

Elastomeric block copolymers, especially elastomeric styrenic block copolymers (SBCs), typically exhibit excellent solid-state elastic performance attributes. Their melt state thermal stability may, however, leave much to be desired. Common styrene-butadienestyrene (SBS) block copolymers readily form gels as a result of cross-linking at temperatures necessary to pass the block copolymers through conventional melt spinning or spun bonding die apertures at commercially acceptable rates or draw-downs. An attempt to draw fibers from such SBS block copolymers at temperatures below that at which cross-linking occurs also fails to reach commercially acceptable rates due to ductile or melt fracture of the fibers.

Partially hydrogenated (also known as "partially saturated") SBCs, such as those provided by Kraton Corp., and formerly provided by Shell Chemical Company, under the trade designation KRATON™ G SEBS, present challenges to those who seek to convert them as neat polymers into melt blown fibers or spunbond fibers, particularly at typical commercial fabrication rates. In order to attain such rates, conventional practices include combining the partially hydrogentated SBCs with one or more low molecular weight additives (for example, oils, waxes and tackifiers). A potential drawback in using such additives is that, in order to reach commercial fabrication rates, they must be used in an amount that adversely compromises strength and elastic properties of the partially hydrogenated SBCs.

USP 4,663,220 teaches, at column 2, lines 7-68, especially lines 15-56, teaches that excessive degradation of elastomeric polystyrene/poly(ethylene-butylene)/polystyrene (SEBS) block copolymer resins may result in forming non-elastic resin such as diblock copolymers.

Styrene-isoprene-styrene block copolymers, like styrene-ethylene-butylene/styrene block copolymer resins, undergo degradation if melt processed at temperatures above their degradation or decomposition temperature. However, instead of crosslinking like SBS block copolymers, their predominant degradation process is chain scission, resulting in diblock formation. One such block copolymer, VECTOR™ 4111, a SIS triblock copolymer commercially available form Dexco Polymers L. P., has a melt flow rate (MFR), determined in accord with American Society for Testing and Materials (ASTM) D-1238 (200°C and five kilogram (kg) weight) of 12 decigrams per minute, a degradation temperature of 230 degrees centigrade (°C) and a MCST of 270°C. This difference of 40°C leads to considerable degradation as evidenced by loss of elasticity due to diblock formation, and production of an off-odor from degradation byproducts.

The degradation temperature of 230°C is believed to be due, in large part, to the presence of isoprene. On that basis, all isoprene-containing styrenic block copolymers should have a degradation temperature at or about 230°C unless such block copolymers also contain another block component that undergoes either degradation or crosslinking at a temperature less than 230°C, in which case the degradation temperature will be that of said another block component.

USP 4,874,447 discloses preparation of polymeric fibers from a polymeric blend that comprises at least one elastomeric polymer, such as an isoprene-styrene elastomer, and at least one thermoplastic polymer, such as polyethylene, polypropylene or a copolymer of ethylene and propylene. The polymeric blend must be subjected to controlled degradation, preferably in the presence of a free radical source compound, until the intrinsic viscosity of the blend is reduced to a value within the range suitable for preparing a nonwoven web.

Published US Patent Application 2001/0107323 discloses transparent polymeric blends comprising a monovinyl aromatic-conjugated diene copolymer having a weight average molecular weight (M_{w}) of 50,000 to 400,000, a monovinylidene aromatic polymer having a Mw of 50,000 to 400,000 and a styrene-isoprene-styrene triblock copolymer having a Mw of 40,000 to 150,000 and a styrene content of 25-60 percent by weight, based on triblock copolymer weight. The polymeric blends have a MFR (ASTM D 1238 at 200°C, 5 kg) of 0.1 to 20 grams per 10 minute (g/10 min or dg/min). The example section uses Vector^{™} 4411, a styrene-isoprene-styrene (SIS) triblock polymer with a MFR (ASTM D 1238 at 200°C, 5 kg) of 40 g/10 min.

A need exists for neat elastomeric polymers suitable for conversion to fibers by way of spunbond techniques, melt spinning processes or a combination of such techniques and processes at temperatures no greater than, and preferably below, their degradation temperature.

A first aspect of this invention is a block copolymer containing alternating blocks of polymerized monoalkenyl arene and polymerized isoprene, the block copolymer having at least two polymerized monoalkenyl arene blocks, a melt flow rate, as determined by ASTM D 1238 (200°C, 5 kg weight), of more than 40 dg/min, a MCST that is less than or equal to its degradation temperature (nominally 230°C), and a viscosity at the MCST of no more than 1500 poise (150 pascal seconds). If desired, an amount of low molecular weight additives, such as those described above, may be added to the block copolymer of this invention provided the amount does not adversely affect physical and elastic characteristics of that block copolymer.

A second aspect of this invention is a polymer blend composition comprising the block copolymer of the first aspect in combination with a polymer selected from the group consisting of polyolefins, thermoplastic polyurethanes, polycarbonates, polyamides, polyethers, poly/vinyl chloride polymers, poly/vinylidene chloride polymers, and polyester polymers.

Where ranges are stated in this Application, the ranges include both endpoints of the range unless otherwise stated.

For purposes of this Application, "degradation temperature" means that temperature at which a polymer begins to lose weight as determined by thermogravimetric analysis (TGA). TGA involves heating a polymer in the presence of nitrogen gas while monitoring polymer weight.

An alternate and preferred technique for determining a temperature at which polymer degradation begins uses differential scanning calorimetry-accelerating rate calorimetry (DSC-ARC). DSC-ARC analysis heats a 2.5 gram (g) sample of a polymer disposed in a stainless steel sample container under a nitrogen atmosphere at a rate of 5°C/min beginning at a start temperature of 30°C and continuing until the first to occur of an end temperature of 350°C, a pressure limit of 4,000 pounds per square inch (psi) (27.6 megapascals (MPa)) or an exothermic temperature rate of 1000°C/min. DSC-ARC analysis determines degradation temperature by heat flow or onset of an exotherm. DSC-ARC analysis of VECTOR™ 4111 detects the onset of an exotherm at 229.68°C.

Skilled artisans understand that minor differences exist between the degradation temperature as determined by TGA and the degradation temperature as determined by DSC-ARC. For most polymers, however, the difference is not enough to affect whether the polymer is suitable for use in producing a spunbonded fiber product.

For purposes of this specification, "minimum capillary spinning temperature or MCST" is the minimum temperature at which a Goettfert Rheograph Model 2003 Capillary Rheometer may be set and still spin fibers from the block copolymers of the present invention at a nominal velocity of 1000 feet per minute (ft/min) or 305 meters per minute (m/min). MCST may be determined using the process detailed below.

For purposes of this specification, "molecular weight" means weight average molecular weight, or M_{w}. Determine M_{w} by using gel permeation chromatography (GPC) to measure peak molecular weight and use a polystyrene standard with a known molecular weight to correct the peak molecular weight to an M_{w}. Commercially-available polystyrene calibration standards were used and the molecular weights of copolymers were corrected according to Runyon et al, J. Applied Polymer Science, Vol 13 Page 359 (1969) and Tung, L H J, Applied Polymer Science, Vol 24 Page 953 (1979).

A Hewlett-Packard Model 1090 chromatograph with a 1047A refractive index detector is a suitable apparatus for size exclusion chromatography determinations. In making these determinations, the chromatograph is equipped with, for example, four 300 mm x 7.5 mm Polymer Laboratories SEC columns packed with five micrometer particles, two with particles having a 10⁵ angstrom pore size, one with particles having a 10⁴ angstrom pore size, and one with particles of mixed pore sizes. Use HPLC grade tetrahydrofuran (THF) flowing at a rate of 1 millimeter per minute (ml/min) as the carrier solvent, a setting of 40°C for column and detector temperatures, and a run time of 45 minutes for the determinations.

The monoalkenyl arene-isoprene-monoalkenyl arene block copolymers, for example, styrene-isoprene-styrene block polymers, of the present invention can be prepared by anionic polymerization, followed by capping or termination of the resulting living polymer. For purposes of the present specification, "living polymer" refers to the polymer being produced as it exists during an anionic polymerization process. Examples of sequential polymerization processes that result in living block polymers after completion of polymerization are known in the prior art and include USP 5,242,984; USP 5,750,623; and Holden; et. al. Thermoplastic Elastomers, 2nd Edition; pages 51-53, 1996.

Preparation of monoalkenyl arene-isoprene-monoalkenyl arene block copolymers of this invention involves charging a first amount of monoalkenyl arene and an initiator in a first stage and allowing polymerization of the monoalkenyl arene to proceed substantially to completion and then following the first stage by sequentially charging, in alternating fashion, isoprene monomer and monoalkenyl arene with the proviso that polymerization of the preceding monomer charge should be substantially complete before the next monomer charge is added. In other words, in stage two, as in the first stage, polymerization of isoprene should be substantially complete before stage three begins with addition of a second charge or amount of monoalkenyl arene. The second amount of monoalkenyl arene can be, but does not need to be, the same as the first amount.

If one desires to produce a triblock copolymer with polymerized monoalkenyl arene end blocks, no further monomer charge is added and polymer recovery commences. Recovery of the block copolymer, preferably a linear block copolymer prepared in the absence of a coupling agent, begins by adding a conventional catalyst-inactivating material such as water, an alcohol, an organic acid or an inorganic acid. Recovery continues via conventional procedures including precipitation for example, by adding further alcohol, filtration, decantation and steam stripping. If desired, the block copolymer may be purified by conventional means including redissolution of the copolymer in a suitable solvent and recovering the polymer as before in a second recovery step.

If one desires to produce a tetrablock copolymer or a higher block copolymer, simply continue adding alternating charges of isoprene monomer and monoalkenyl arene, in each instance allowing polymerization of the preceding monomer charge to proceed substantially to completion, until one obtains the desired, but not yet terminated block copolymer and then proceed with polymer recovery as detailed above.

The block copolymers of the present invention have a MCST that is less than or equal to their degradation temperature, nominally 230°C. The MCST is preferably less than the degradation temperature, more preferably within a range of from 130°C to 229°C, still more preferably within a range of from 160°C to 229°C, and most preferably within a range of from 200°C to 229°C. A MCST in excess of the degradation temperature may be used if melt processing of the block copolymers occurs in a short enough time period to minimize formation of degradation products. Skilled artisans understand that as MCST increases above the degradation temperature, the time period decreases if the goal is to minimize degradation product formation. At temperatures below 130°C, the block copolymers may not be in a melt state and, as such, are not spinnable using conventional melt spinning or spun bond processes. If the block copolymers of the present invention are to be used to form the core of a bicomponent (for example, core-shell or core-sheath) fiber, one must exercise care in avoiding an excessively large mismatch between melt temperatures of the block copolymer core and that polymer used as the shell or sheath. If the core block copolymer is too cool, for example, with a MCST below 200°C, relative to the shell or sheath polymer, the block copolymer may cool the sheath or shell polymer to a point where resulting bicomponent fibers may have either or both of less than optimal properties or poor appearance.

The block copolymers of the present invention have a molecular weight that varies depending upon whether the block copolymer is a triblock copolymer, a tetrablock copolymer, a pentablock copolymer or a higher (for example, heptablock, octablock, nonablock, decablock) block copolymer. If the block copolymer is a SIS triblock copolymer containing 10 to 40 percent styrene, the molecular weight is preferably from 50,000 to 90,000, more preferably from 60,000 to 80,000.

It has surprisingly been discovered that the block copolymers with more blocks have lower viscosity at an equivalent Mw. In other words, at a given molecular weight, a SISIS pentablock copolymer will have a lower viscosity than a SIS triblock copolymer. Because of that phenomenon, for SISIS pentablock copolymers containing 10 to 50 percent styrene, molecular weight ranges from 70,000 to 200,000, more preferably from 90,000 to 110,000. Molecular weights for analogues of the triblock and pentablock copolymers, such as tetrablock copolymers and higher block copolymers (for example, hexablock, heptablock and higher) are readily determined without undue experimentation. Stated in another way, to achieve an equivalent low viscosity for spinning, a higher Mw SISIS pentablock can be used versus a SIS triblock. As a rough guide, tetrablock copolymers tend to have a molecular weight intermediate between triblock copolymers and pentablock copolymers and higher block copolymers, such as hexablock copolymers tend to have a molecular weight above that of the pentablock copolymers.

In order to render the block copolymer pellets suitable for further processing in non-woven fiber production equipment such as that used in spin bonding or melt spinning, a surface-modifying agent is usually applied to the block copolymer pellets during the finishing process. While talc is a frequently used surface-modifying agent, it has a marked tendency to cause filter plugging in fiber spinning equipment. Other conventional surface-modifying agents include silica, polyethylene dust, polystyrene dust, calcium stearate, zinc stearate, magnesium stearate as well as slip agents such as erucamide, oleamide, glycerol dioleate and monodioleate. A preferred surface-modifying agent is a combination of calcium stearate and an emulsifier.

The block copolymers of the present invention preferably comprise styrene and isoprene and have a styrene content that varies according to which block copolymer is selected. For SIS triblock copolymers, the styrene content for the broadest molecular weight range specified above is within a range of from 10 to less than 40 percent by weight (wt percent), based on block copolymer weight. An upper limit of wt percent styrene in SIS triblock copolymers is preferably 38 wt percent, more preferably 37 wt percent and most preferably 35 wt percent. A lower limit of wt percent styrene in SIS triblock copolymers is preferably 14 wt percent, more preferably 15 wt percent, in each instance based upon block copolymer weight. SISIS pentablock copolymers of the present invention may have a greater styrene content than their SIS triblock counterparts and still have a MCST less than the degradation temperature of the SISIS pentablock copolymer. The styrene content may be as high as 50 wt percent, but is more preferably less than 45 wt percent, and as low as 10 wt percent, but more preferably 15 wt percent or more, in each instance based on block copolymer weight. If the styrene content is too high, for example, more than 40 wt percent for triblock copolymers, the MCST of the block copolymer tends to exceed the degradation temperature. As styrene content of triblock copolymers continues to increase above 40 wt percent, the MCST of the copolymers also trends upward. Similar trends are believed to occur for other styrene-isoprene block copolymers such as the SISI tetrablocks, the SISIS pentablocks, SISISI hexablocks and SISISIS heptablocks, albeit with different upper limits on styrene content.

Monomers useful in producing polymers of the present invention are those that are susceptible to anionic polymerization. These monomers are well known in the art. Examples of anionically polymerizable monomers suitable for this invention include monoalkenyl aromatic compounds, such as styrene and alphamethylstyrene, vinyltoluenes; vinylpyridine; and isoprene. Preferred monomers are styrene, and isoprene. While conjugated dienes other than isoprene may be used if desired, for example, butadiene, isoprene yields desirable results in terms of processability via spin bonding, melt spinning or both and, as such, remains a preferred monomer choice.

Alkali metal hydrocarbon initiators suitable for anionic polymerization are well known in the art. Examples of such initiators include lithium alkyls, sodium alkyls, and potassium alkyls. Preferred initiators are lithium alkyls, such as sec-butyllithium and n-butyllithium. USP 3,937,760, particularly at column 3, lines 33-50, is but one of many references that describe suitable initiators as compounds containing a carbon-lithium or carbon-sodium bond.

Preparation of the block copolymers of the present invention occurs by way of a polymerization process carried out in an inert hydrocarbon diluent at any suitable temperature within a range of from -10°C to 150°C, preferably from 0°C to 110°C, at pressures within a range of from ambient to 300 pounds per square inch gauge (psig) (2068.4 kilopascals (kPa)), preferably from 10 to 150 psig (68.9 kPa to 1034.2 kPa) Temperatures and pressures will peak during polymerization of each monomer charge and then decrease until essentially no free monomer is left to react. Solvents or diluents suitable for the polymerization are also well known in the art. Examples included aromatic hydrocarbons, saturated aliphatic hydrocarbons, saturated cycloaliphatic hydrocarbons, linear ethers and cyclic ethers, and mixtures thereof. Desirable solvents or diluents include linear and cycloparaffins such as butane, pentane, hexane, octane, cyclohexane, cyclopentane, and mixtures thereof. Preferred solvents or diluents are cyclohexane, n-hexane, and isopentane, and mixtures thereof. Choice of diluent, temperature and pressure have a single goal in mind, to keep the resulting polymer in solution until polymerization is complete, living anions are terminated or capped, and the resulting polymer is ready for recovery.

While the polymer product is still in solution, stabilization agents can be added. Additional stabilizers may be added during finishing before pelletizing. This treatment will provide oxidative stability for the polymer during processing and handling and subsequent long term use by the customer.

Commonly used stabilization processes can use a combination of compounds which include a hindered phenol and an organophosphite, particular examples of which are octadecyl 3-(3',5'-di-t-butyl-4'-hydroxyphenyl) propionate and trisnonylphenylphosphite.

After stabilization, the hydrocarbon diluent is flashed from the polymer solution to increase the solids content and yield a polymer cement. The polymer cement usually contains 10 to 40, more usually 20 to 35, wt percent solids, with the balance (80 to 65 wt percent) being solvent. In each case the amount is based upon polymer cement weight and the amounts, when combined, equal 100 wt percent.

Flashing of the polymer cement may be followed by desolventizing extrusion with vacuum in commercial production or by other vacuum processes to achieve consistent solvent content of less than 0.3 wt percent, based on polymer cement weight.

The block copolymers of the present invention can be compounded with additional anti-oxidants, anti-blocking agents, or other additives such as release agents, as known in the compounding arts. The block copolymers of the present invention may also be mixed with other polymers, particularly tackifiers, waxes, mineral oil, colorants, or fillers.

Polymeric materials suitable for combination with the block copolymer to form a polymer blend include polyolefins (for example, ethylene/styrene interpolymer, ethylene-alpha olefin interpolymers where the alpha-olefin includes 3 or more carbon atoms, polypropylene, an enhanced polypropylene polymer, and a polyolefin elastomer or plastomer made using a single-site metallocene catalyst system (for example, a homogeneously branched ethylene polymer such as a substantially linear ethylene interpolymer or a homogeneously branched linear ethylene interpolymer), polystyrene, thermoplastic polyurethanes, polycarbonates, polyamides, polyethers, poly/vinyl chloride polymers, poly/vinylidene chloride polymers, and polyester polymers. Examples of olefin polymers include polyethylene (ethylene homopolymer), ethylene/alpha-olefin interpolymers, alpha-olefin homopolymers, such as polypropylene (propylene homopolymer), alpha-olefin interpolymers, such as interpolymers of polypropylene and an alpha-olefin having at least 4 carbon atoms.

Additive classes that may be used in the practice of this invention include antioxidants, radical scavengers, and UV absorbers, for example, Irgafos®, Irgastab, Tinuvin, or Irganox® supplied by Ciba Geigy Corp. The antioxidants, radical scavengers, and UV absorbers may be added to the mixture and/or blends thereof at levels typically less than 1 percent to protect against undo degradation during shaping or fabrication operation or to better control the extent of grafting or crosslinking (that is, inhibit excessive gelation) or to stabilize the final product. In-process additives, for example, calcium stearate, water, and fluoropolymers may also be used for purposes such as for the deactivation of residual catalyst or for further improved processability. Colorants, color enhancers, and fillers, such as masterbatches of dyes in thermoplastic polymers, titanium dioxide, talc, clay, silica, calcium carbonate, magnesium hydroxide, stearic acid and metal stearates (these are anti-block waxes) are also possible.

While not necessary, tackifiers may be used in conjunction with the block copolymers and polymer blends of the present invention. Representative tackifiers include aliphatic polymer resins containing five carbon atoms (C₅ resins), polyterpene resins, hydrogenated resins, mixed aliphatic-aromatic resins, rosin esters, and hydrogenated rosin esters. Satisfactory tackifiers typically have a viscosity at 350° Fahrenheit (°F.) (about 177°C), as measured using a Brookfield viscometer, of no more than 300, generally no more than 150, and in some instances, of no more than 50 centipoises. These tackifiers usually have a glass transition temperature greater than (>) 50° C.

Representative aliphatic tackifiers for use in the present invention include those available under the trade designations Escorez®, Piccotac®, Mercures®, Wingtack®, Hi-Rez®, Quintone®, and Tackirol®. Suitable polyterpene tackifiers include those available under the trade designations Nirez®, Piccolyte®, Wingtack®, and Zonarez®. Suitable hydrogenated tackifiers include, but are not limited to, those available under the trade designations Escorez®, Arson®, and Clearon®. Representative mixed aliphatic-aromatic tackifiers include those available under the trade designations Escorez®, Regalite®, Regalrez®, Hercures®, AR®, Imprez®, Norsolene® M, Marukarez®, Arkon® M, Quintone ®. Other tackifiers may be employed, provided they are compatible with the block copolymer.

If desired, waxes such as paraffinic or crystalline polymers having a number average molecular weight less than (<) 6000 may be used as processing aids. Exemplary polymers falling within this category include ethylene homopolymers available from Petrolite, Inc. (Tulsa, Okla.) as Polywax® 500, Polywax® 1500 and Polywax® 2000; Sasobit® and Paraflint® H1 from Moore and Munger; and paraffinic waxes available from CP Hall under the product designations 1230, 1236, 1240,1245, 1246,1255, 1260, and 1262. Satisfactory waxes have a number average molecular weight less than 5000 and greater than 800. In general, the waxes have a melting point above 25°C and below 150°C.

Representative ethylene polymer waxes include an ethylene homopolymer (either a traditional ethylene homopolymer wax or an ethylene homopolymer prepared with a constrained geometry catalyst) or an interpolymer of ethylene and a comonomer, the interpolymer having a density of at least 0.910 grams per cubic centimeter (g/cm³) and no more than 0.970 g/cm³.

While not necessary, one may add an oil to the block copolymers and polymer blends of the present invention. Illustrative oils include fats, viscous liquids, greases and volatile liquids which are classified as mineral, vegetable, animal, essential or edible oil. When employed, oils will be present in an amount less than 40 percent. Exemplary oils include white mineral oil (such as Kaydol® and Hydrobrite® oil available from Witco), and Shellflex® 371 naphthenic oil (available from Shell Oil Company). Polysiloxane fluids also fall within this class, such as various polydimethylsiloxanes sold by Dow Coming.

Slip agents may also be combined with the block copolymers or polymer blends of the present invention especially if they are to be used in preparing bicomponent fibers, particularly as the core of a bicomponent fiber. Illustrative slip agents include liquids such as mineral oil or polydimethyl siloxane or polyglycols (PEG = polyethylene glycol); low molecular weight solids such as waxes or erucamide (Advawax); perfluoro processing aids, such as Dynamar (from Dyneon); or spin finishes and mold releases, such as Lurol (Goulston Technologies) or MoldWiz (Axel Inc.) additives, and combinations thereof.

The blends of this invention can be prepared by any suitable means including blending, tumbling and extrusion. Examples of these methods include dry mixing in the form of a powder or pellets, wet mixing in the form of a solution or slurry, and melt extrusion compounding.

The polymers and any other ingredients or additives may be mechanically blended together in the desired proportions with the aid of any suitable mixing device conventionally used for mixing rubbers or plastics, such as, for example, a differential roll mill, a Banbury mixer, or an extruder.

The block copolymers of this invention have a utility in that they may be converted to fibers using conventional melt spinning or spin bonding techniques. Examples of various types of spunbond processes are found in USP 3,338,992, USP 3,692,613, USP 3,802,817, USP 4,405,297, USP 4,812,112 and USP 5,665,300. Melt blowing techniques and apparatus are disclosed in USP 3,849,241 USP 5,663,2200. The block copolymers of this invention may also be used as a component of bicomponent fibers that are prepared using known technology such as that disclosed in USP 5,108,820, USP 5,336,552, USP 5,382,400.

The block copolymers of the present invention find particular utility in making bicomponent fibers, especially when their molecular weight falls below about 110,000 and they evidence an increasing level of surface tackiness. This surface tackiness may reach a point where the block copolymers are labeled as "sticky". Excessive surface tackiness leads, in the production of mono-component fibers to fibers that stick to one another in a phenomenon referred to as "roping" and consequent less than optimal nonwoven fabrics. One may avoid roping and obtain desirable non-woven fabrics by preparing bi-component fibers using techniques such as those taught in USP 5,162,074.

The block copolymers of this invention can be converted to fibers using a melt blown technique by extruding a molten composition through a plurality of fine, usually circular, die capillaries as molten threads or filaments into converging high velocity, usually heated, gas streams (for example, air) which function to attenuate the threads or filaments to reduced diameters. Thereafter, the filaments or threads are carried by the high velocity gas streams and deposited on a collecting surface to form a web of randomly dispersed fibers with average diameters generally smaller than 10 micrometers. of the produced sheet.

The polymers of this invention may be formed into fibers using spunbond and spunlaid techniques by a) extruding filaments of polymer melt from a spinneret; b) quenching the filaments with a flow of air which is generally cooled in order to hasten the solidification of the polymer melt filaments; c) attenuating the filaments by advancing them through a quench zone with a draw tension that can be applied by either pneumatically entraining the filaments in an air stream or by wrapping them around mechanical draw rolls, such as those commonly used in the textile fiber industry; and either d) collecting the drawn filaments into a web on a foraminous surface (spunlaid); or e) bonding the web of loose filaments into a fabric (spunbond). The resulting fibers typically have diameters within a range of from 15 to 35 micrometers.

The following examples illustrate the present invention. Arabic numerals represent examples (Ex) of the invention and letters of the alphabet designate comparative examples (Comp Ex). All parts and percentages are by weight unless otherwise stated. In addition, all amounts shown in the tables are based on weight of polymer contained in the respective compositions unless otherwise stated.

### Goettfert Rheograph Capillary Rheometer

Evaluate fiber spinnability using a Goettfert Rheograph Model 2003 that consists of a barrel containing three heating zones, a force transducer to regulate polymer melt pressure, a capillary die of varied orifice diameter and length, and a variable speed plunger to push polymer melts at constant or varied speeds. Process each polymer at a set experimental conditions with temperature changes to facilitate optimum process conditions. Collect fiber exiting from the Rheograph 2003 on a high-speed double roller godet. Regulate roller speed by controlling roller revolutions per minute (rpm). Keep capillary die dimensions (0.35 millimeter (mm) length with a length to diameter ratio (L/D) of 5), and plunger speed (0.147 millimeters per second (mm/s), or a polymer flow rate of 1 g/min). Change temperature as needed to optimize maximum fiber collection speed on the high-speed roller apparatus. Relative break velocity, as measured by the capillary rheometer, is an indication of spinnability in textile processes.

Measure melt viscosity on a Goettfert capillary rheometer. The Goettfert capillary rheometer contains a heated barrel, a piston with a device to forward it at a known velocity, and a capillary 30 mm long and one (1) mm diameter. The barrel temperature is adjusted to a known setting. Polymer is loaded in the barrel and allowed to preheat with the piston for 5 minutes. Then the piston is advanced at a constant known velocity, corresponding to a known shear rate of the polymer through the capillary die. A transducer measures the polymer pressure before the capillary die. From the polymer shear rate and polymer pressure, the viscosity is calculated. The measured shear rate and polymer viscosity are corrected using the Rabinowitsch / Weisenberg corrections to obtain the corrected shear rate and corrected viscosity. The piston is then advanced at a series of shear rates to give a corresponding set of viscosity / shear rate data for the given temperature.

### Comparative Examples (Comp Ex) A through E:

Table 1 below presents the Mw, percent styrene and a description for a number of commercial SBCs and MCST data for fiber tows prepared from the commercial SIS SBCs.

Prepare fiber tows using a Goettfert Rheograph Model 2003 that consists of a barrel containing three heating zones, a force transducer to regulate polymer melt pressure, a capillary die of varied orifice diameter and length, and a variable speed plunger to push polymer melts at constant or varied speeds. Process the polymer at a set of experimental conditions with temperature changes to facilitate optimum process conditions. Keep the capillary die dimensions (0.35 millimeter (mm) length with a length to diameter ratio (L/D) of 5), and plunger speed (0.147 millimeters per second (mm/s), or a polymer flow rate of 1 g/min). Collect fiber that exits from the Rheograph 2003 on a high-speed double roller godet. Increase roller speed by increasing roller revolutions per minute (rpm) until the fiber breaks. When the break velocity is reached, remove the outer polymer fibers from the godet and measure it for elastic properties such as percent recovery.

**Table 1: Material properties of commercial SIS triblock SBCs. Capillary rheometer fiber spinning conditions for commercial SBC polymers and recovery of elasticity for the formed fiber tows following 2 cycles to 100 percent elongation.**

| Comp Ex | Commercial Name | Polymer Design | percent Styrene | Mw* kDalton | MFR* g/10 min | MCST (°C) and Vel., (m/min) | | Recovery percent |
|---|---|---|---|---|---|---|---|---|
| A | Vector™ 4111 | SIS | 18 | 130 | 12 | 270 | 390 | 81 |
| B | Vector™ 4211 | SIS | 29 | 100 | 13 | 250 | 150 | 95 |
| C | Vector™ 4411 | SIS | 44 | 77 | 40 | 270 | 480 | 80 |
| D | Vector™ 4213 | SIS + 25 wt percent SI | 25 | 116 | 12 | 260 | 300 | 92 |
| E | Kraton™ 1107 | SIS + 17 wt percent SI | 15 | 160 | 9 | 285 | 150 | 73 |
| F | Enichem Sol-T™ 9113 | SIS** + 12 wt percent SI | 18 | 126 | 8 | 275 | 420 | 95 |

| | | | | | | | | |
|---|---|---|---|---|---|---|---|---|
| Vector block copolymers are supplied by Dexco, a Dow/Exxon Joint Venture Company. Kraton block copolymers are supplied by Kraton Corp. *Mw and MFR values are approximate, based on general polymer grade. ** Coupled Linear SIS | | | | | | | | |

The data in Table 1 show that, while the commercial materials yield fibers drawn at high velocities, they do so under conditions that exceed 230°C, nominally the degradation temperature of isoprene-containing SBCs, even with diblock blended into Comp Ex D - F to lower SBC viscosity. Although difficult to quantify, the resulting fibers tend to evidence an odor typically associated with degraded polymer.

### Examples (Ex) 1 to 6 and Comparative Examples (Comp Ex) G-I

### Synthesis of SIS Polymers for Example 1-3 and Comparative Example G

To a five (5) gallon (gal) ((0.019 cubic meters) stirred reactor, equipped with a steam/water jacket, under a nitrogen atmosphere add an amount (see Table 2) of cyclohexane solvent. Bring the temperature of the reactor to a set temperature of 76° C and sequentially add an amount (see Table 2) of a 0.22 molar (M) solution of sec-butyllithium (SBL) in cyclohexane and a first amount (see Table 2) of styrene monomer. Before they are added to the reactor, the solvent and all monomers are purified before use by passing them through activated alumina beds. Allow polymerization of the styrene monomer to proceed for 38 minutes, reducing the reactor set temperature to 60.7° C over approximately the last five (5) minutes. Add an amount (see Table 2) of isoprene to the reactor and allow it to polymerize for 28 minutes, during which the reactor temperature reaches a maximum temperature of 99° C before dropping back to 80°C. Add a second amount (see Table 2) of styrene and allow polymerization to continue for a period of 23 minutes. Add 4 milliliters (ml) of 2-propanol to terminate the reaction. The amounts of solvent and monomers in Table are expressed in terms of grams (g) or kilograms (kg). The amount of catalyst in Table 2 is expressed in terms of ml or liters (L).

### Synthesis of SISI Polymers for Example 4 and Comparative Example H

Replicate the synthesis of SIS polymers with certain changes. Allow polymerization of the first amount of styrene monomer to proceed for 30 minutes rather than 38 minutes and reduce the reactor set temperature to 64°C rather than 60.7°C over the last five (5) minutes. Allow isoprene polymerization to proceed for 24 minutes rather than 28 minutes, during which the reactor contents reach a maximum temperature of 89°C rather than 99°C before dropping back to 77°C rather than 80°C. Allow polymerization of the second amount of styrene monomer to proceed for 25 minutes rather than 23 minutes and reduce the reactor set temperature to 70°C over the last five (5) minutes. Before terminating the reaction, add a second amount (see Table 2) of isoprene monomer and allow it to polymerize for 15 minutes during which the reactor contents reach a maximum temperature of 75°C.

### Synthesis of SISIS Polymers for Examples 5 and 6 and Comparative Example I

Using a 200 gallon (0.757 cubic meters), replicate the process used to prepare SISI block copolymers, but add a third amount (Amt) of styrene monomer (see Table 2) before adding the 2-propanol to terminate the reaction.

Examples 5 and 6 and Comp Ex G and I include data for two polymerization batches rather than one batch or run as in Ex 1-4 and comp Ex H. The amounts are shown individually rather than as an average. The batches have the same number, for example, 5, except that the second batch is modified by prime ('), for example, 5'.

**Table 2 - Synthesis of Isoprene-Containing SBCs**

| Ex/Comp Ex | Polymer | Solvent | SBL | SBL | 1^{st} Styrene | 1 st Isoprene | 2^{nd} Styrene | 2^{nd} Isoprene | 3^{rd} Styrene |
|---|---|---|---|---|---|---|---|---|---|
| | Type | (kg) | Concentration (M) | Amt | Amt | Amt | Amt | Amt | Amt |
| 1 | SIS | 13.6 | 0.22 | 63.4 ml | 121.9 g | 1973 g | 121.9 g | none | none |
| 2 | SIS | 13.6 | 0.22 | 93.4 ml | 177.4 g | 1863 g | 177.4 g | none | none |
| 3 | SIS | 13.7 | 0.22 | 146.4 ml | 345.0 g | 1536 g | 345.0 g | none | none |
| 4 | SISI | 13.6 | 0.22 | 89.2 ml | 177.5 g | 1304 g | 177.5 g | 559 g | none |
| 5 | SISIS | 473 | 1.41 | 0.66 L | 6.71 kg | 49.13 kg | 6.71 kg | 49.13 kg | 6.71 kg |
| 5' | SISIS | 473 | 1.41 | 0.65 L | 6.71 kg | 49.13 kg | 6.71 kg | 49.13 kg | 6.71 kg |
| 6 | SISIS | 474 | 1.41 | 0.81 L | 9.51 kg | 45.16 kg | 9.51 kg | 45.16 kg | 9.51 kg |
| 6' | SISIS | 475 | 1.41 | 0.82 L | 9.51 kg | 45.16 kg | 9.51 kg | 45.16 kg | 9.51 kg |
| G | SIS | 13.6 | 0.22 | 84.2 ml | 199.9 g | 1822 g | 199.9 g | none | none |
| G' | SIS | 13.6 | 0.22 | 79.1 ml | 199.9 g | 1822 g | 199.9 g | none | none |
| H | SISI | 13.7 | 0.22 | 55.4 ml | 194.5 g | 349 g | 194.5 g | 1486 g | none |
| I | SISIS | 506 | 1.41 | 0.78 L | 8.47 kg | 52.64 kg | 4.61 kg | 52.64 kg | 8.47 kg |
| I' | SISIS | 506 | 1.41 | 0.72 L | 8.47 kg | 52.64 kg | 4.61 kg | 52.64 kg | 8.47 kg |

The polymers produced in Examples 1-6 are converted into fiber tows using the procedure outlined above for Comp Ex A-F. Data for the fiber tows, tested in the same manner as for Comp Ex A-F, is summarized in Table 3 below.

**Table 3: Material properties and fibers produced via capillary rheometer for experimental SBC polymers. Recovery is measured in these examples after 2 cycles to 100 percent elongation.**

| Patent Example | Polymer Design | Styrene percent | Mw kDalton | MFR g/10 min | MCST, (°C) and Vel., (m/min) | | Recovery percent |
|---|---|---|---|---|---|---|---|
| 1 | SIS | 11 | 140 | 44 | 200 | 300 | 96 |
| 2 | SIS | 16 | 93 | 177 | 190 | 420 | 96 |
| 3 | SIS | 31 | 64.5 | 240 | 205 | 450 | 86 |
| 4 | SISI | 16 | 106 | 153 | 170 | 330 | 91 |
| 5 | SISIS | 18 | 126 | 49 | -- | -- | 90 |
| 6 | SISIS | 25 | 102 | 82 | -- | -- | 90 |

| | | | | | | | |
|---|---|---|---|---|---|---|---|
| -- means not measured | | | | | | | |

The data presented in Table 3 for Ex 1-4 show that the triblock copolymers (Ex 1-3) and tetrablock copolymers (Ex 4) of the present invention yield very satisfactory fibers at a MCST below the nominal degradation temperature of 230°C. The MFR, Mw and percent recovery data for Ex 5-6 suggest that similar results may be obtained with pentablock polymers of the present invention. The data also suggest that similar results may be obtained with higher block copolymers (for example, hexablock and heptablock copolymers). The data further suggest that one can, by carefully adjusting a combination of styrene content and Mw, tailor a block copolymer to attain a desired spinning temperature. When the block copolymers are to be used as the core of a core-shell bicomponent fiber, such tailoring enables one to attain a closer match between melt temperatures of the core polymer and the sheath polymer as long as the melt temperature of the shell or sheath polymer does not exceed the degradation temperature of the block copolymer.

### Comp Ex G-I

Convert the block copolymers of Comp Ex G-I into fiber tows as in Ex 1-6 and test them as in Comp Ex A-F and Ex 1-6. Summarize the test results in Table 4 below.

**Table 4: Material properties and fibers produced via capillary rheometer for experimental SBC polymers. Recovery is measured in these examples after 2 cycles to 100 percent elongation.**

| Patent Example | Polymer Design | Styrene percent | Mw kDalton | MFR g/10 min | MCST, (°C) and Vel., (m/min) | | Recovery percent |
|---|---|---|---|---|---|---|---|
| G | SIS | 18 | 107 | 40 | -- | -- | -- |
| H | SISI | 17.5 | 169 | 4.9 | 270 | 152 | 80 |
| I | SISIS | 18 | 129.3 | 41 | -- | -- | -- |

| | | | | | | | |
|---|---|---|---|---|---|---|---|
| -- means not measured | | | | | | | |

The data in Table 4 demonstrate that MFR and styrene content alone are not enough to render a polymer suitable for conversion to fibers via spun bonding techniques. The MCST of 270 for Comp Ex H highlights this point. Similar results are expected for Comp Ex G and Comp Ex I.

### Capillary Rheometer Viscosity Measurements

Subject the block copolymers of Ex 1-6 and Comp Ex A-I to capillary rheometry viscosity measurements at three different temperatures (190°C, 220°C and 240°C) and two different shear rates (100 reciprocal seconds (sec⁻¹) and 1000 sec⁻¹) and summarize the measurements in pascal seconds (Pa·s) in Table 5 below.

**Table 5. Capillary rheometer viscosity measurements (Corrected viscosity data at corrected shear rate values)**

| Example | Visc (Pa·s) 190°C 100 1/s | Visc (Pa·s) 190°C 1000 1/s | Visc (Pa·s) 220°C 100 1/s | Visc (Pa·s) 220°C 1000 1/s | Visc (Pa·s) 240°C 100 1/s | Visc (Pa·s) 240°C 1000 1/s |
|---|---|---|---|---|---|---|
| A | 1188 | 257.6 | 613.0 | 196.3 | 344.1 | 155.3 |
| B | 999.9 | 229.1 | 468.2 | 157.9 | -- | -- |
| C | 411.8 | 207.3 | 131.2 | 114.6 | 81.23 | 69.02 |
| D | -- | -- | -- | -- | -- | -- |
| E | -- | -- | -- | -- | -- | -- |
| F | -- | -- | -- | -- | -- | -- |
| G | -- | -- | -- | -- | -- | -- |
| H | -- | -- | -- | -- | -- | -- |
| I | -- | -- | -- | -- | -- | -- |
| 1 | -- | -- | -- | -- | -- | -- |
| 2 | -- | -- | -- | -- | -- | -- |
| 3 | 97.19 | 59.60 | 23.23 | 25.00 | -- | -- |
| 4 | -- | -- | -- | -- | -- | -- |
| 5 | 568.6 | 195.0 | 281.8 | 152.6 | 185.7 | 122.7 |
| 6 | 388.4 | 170.3 | 160.7 | 117.0 | 105.6 | 88.58 |

| | | | | | | |
|---|---|---|---|---|---|---|
| -- means not yet measured or determined | | | | | | |

The data presented in Table 5 make several points. First, the block copolymers of the present invention, as represented by Examples 1-6, tend, with some exceptions, to have viscosities that are less shear sensitive than commercially available block copolymers as represented by Comparative Examples A-I. Second, the block copolymers of the present invention typically have low viscosities at multiple shear rates, especially at those shear rates encountered in fiber forming processes such as spun bonding and melt spinning. The commercially available block copolymers tend, with some exceptions, to have higher viscosities especially at lower temperatures (for example, 190°C) and lower shear rates (for example, 100 sec⁻¹) than the block copolymers of the present invention. The capillary viscosity data for a variety of temperatures allows one to estimate the MCST of a polymer based upon, for example that temperature required to give a viscosity at, for example, a shear rate of 100 sec⁻¹ of <150 Pa*s. Similar results are expected with other block copolymers that meet the parameters required of block copolymers of the present invention.

## Claims

1. A block copolymer containing alternating blocks of polymerized monoalkenyl arene and polymerized isoprene, the block copolymer having at least two polymerized monoalkenyl arene blocks, a melt flow rate, as determined by ASTM D 1238 (200°C, 5 kilogram weight), of more than 40 decigrams per minute, a minimum capillary spinning temperature that is less than or equal to its degradation temperature and less than or equal 230°C, and that exceeds its spin bonding temperature by at least one degree centigrade, and a viscosity at the minimum capillary spinning temperature of no more than 1500 poise (150 pascal seconds).

2. The block copolymer of Claim 1, wherein the monoalkenyl arene is styrene.

3. The block copolymer of Claim 2, wherein the block copolymer is a styrene- isoprene-styrene triblock copolymer that has a styrene content within a range of from 10 percent by weight to less than 40 percent by weight, based upon block copolymer weight, both ends of the range being included within the range.

4. The block copolymer of Claim 3, wherein the styrene content is less than 38 percent by weight, based on block copolymer weight.

5. The block copolymer of Claim 3, wherein the styrene content is less than 37 percent by weight, based on block copolymer weight.

6. The block copolymer of Claim 3, wherein the styrene content is less than 35 percent by weight, based on block copolymer weight.

7. The block copolymer of Claim 3, wherein the styrene content is greater than 14 percent by weight, based on block copolymer weight.

8. The block copolymer of Claim 3, wherein the styrene content is greater than 15 percent by weight, based on block copolymer weight.

9. The block copolymer of Claim 1, wherein the block copolymer is a styrene-isoprene-styrene-isoprene-styrene pentablock copolymer that has a styrene content within a range of from 10 to 50 percent by weight, based on block copolymer weight.

10. The block copolymer of Claim 9, wherein the styrene content is less than 45 weight percent, based on block copolymer weight.

11. The block copolymer of Claim 9, wherein the styrene content is at least 15 percent by weight, based on block copolymer weight.

12. The block copolymer of any one of the preceding Claims, wherein the minimum capillary spinning temperature is within a range of 130° centigrade to 229° centigrade.

13. The block copolymer of Claim 3, wherein the block copolymer has a molecular weight within a range of from 50,000 to 90,000, both ends of the range being included within the range.

14. The block copolymer of Claim 13, wherein the molecular weight range is from 60,000 to 80,000.

15. The block copolymer of Claim 9, wherein the block copolymer has a molecular weight that falls within a range of from 70,000 to 200,000, both ends of the range being included within the range.

16. The block copolymer of Claim 15, wherein the molecular weight range is from 90,000 to 110,000.

17. The block copolymer of Claim 3, wherein the melt flow rate is less than 5000 decigrams per minute.

18. The block copolymer of Claim 17, wherein the melt flow rate is less than 3000 decigrams per minute.

19. The block copolymer of Claim 3, wherein the viscosity at spin bonding temperature falls within a range of from 200 poise (20 pascal seconds) to 1500 poise (150 pascal seconds), both ends of the range being included in the range.

20. The block copolymer of Claim 9, wherein the viscosity at spin bonding temperature falls within a range of from 200 poise (20 pascal seconds) to 1000 poise (100 pascal seconds), both ends of the range being included in the range.

21. The block copolymer of Claim 1, wherein the block copolymer is selected from the group consisting of styrene-isoprene-styrene-isoprene tetrablock copolymers, styrene-isoprene-styrene-isoprene-styrene-isoprene hexablock copolymers, and styrene- isoprene block copolymers having at least four styrene blocks and at least three isoprene blocks.

22. The block copolymer of Claim 21, wherein the block copolymer contains no more than 7 styrene blocks and no more than 5 isoprene blocks.

23. A polymer blend composition comprising the block copolymer of any one of Claims 1 to 22 in combination with a polymer selected from the group consisting of polyolefins (for example), polystyrene, thermoplastic polyurethanes, polycarbonates, polyamides, polyethers, poly/vinyl chloride polymers, poly/vinylidene chloride polymers, and polyester polymers.

24. The polymer blend composition of Claim 23, wherein the polymer is a polyolefin selected from ethylene/styrene interpolymers, ethylene- alpha olefin interpolymers where the alpha-olefin includes 3 or more carbon atoms, polypropylene, an enhanced polypropylene polymer, a homogeneously branched ethylene polymer, a substantially linear ethylene interpolymer, a polyolefin elastomer or a polyolefin plastomer.

## Patentansprüche

1. Ein Blockcopolymer, das alternierende Blöcke polymerisierten Monoalkenylarens und polymerisierten Isoprens enthält, wobei das Blockcopolymer mindestens zwei polymerisierte Monoalkenylarenblöcke, einen Schmelzdurchfluss von mehr als 40 Dezigramm pro Minute, der nach ASTM D 1238 (200 °C, 5 Kilogramm Gewicht) bestimmt ist, eine minimale Kapillarspinntemperatur, die kleiner als oder gleich seiner Zersetzungstemperatur und kleiner als oder gleich 230 °C ist und die seine Spinbondingtemperatur um mindestens einen Grad Celsius übertrifft, und eine Viskosität bei der minimalen Kapillarspinntemperatur von nicht mehr als 1500 Poise (150 Pascalsekunden) aufweist.

2. Blockcopolymer gemäß Anspruch 1, wobei das Monoalkenylaren Styren ist.

3. Blockcopolymer gemäß Anspruch 2, wobei das Blockcopolymer ein Styren-Isopren-Styren-Triblockcopolymer ist, das einen Styrengehalt innerhalb eines Bereichs von von 10 Gewichtsprozent bis weniger als 40 Gewichtsprozent auf der Basis des Blockcopolymergewichts aufweist, wobei beide Endwerte des Bereichs innerhalb des Bereichs eingeschlossen sind.

4. Blockcopolymer gemäß Anspruch 3, wobei der Styrengehalt weniger als 38 Gewichtsprozent auf der Basis des Blockcopolymergewichts beträgt.

5. Blockcopolymer gemäß Anspruch 3, wobei der Styrengehalt weniger als 37 Gewichtsprozent auf der Basis des Blockcopolymergewichts beträgt.

6. Blockcopolymer gemäß Anspruch 3, wobei der Styrengehalt weniger als 35 Gewichtsprozent auf der Basis des Blockcopolymergewichts beträgt.

7. Blockcopolymer gemäß Anspruch 3, wobei der Styrengehalt mehr als 14 Gewichtsprozent auf der Basis des Blockcopolymergewichts beträgt.

8. Blockcopolymer gemäß Anspruch 3, wobei der Styrengehalt mehr als 15 Gewichtsprozent auf der Basis des Blockcopolymergewichts beträgt.

9. Blockcopolymer gemäß Anspruch 1, wobei das Blockcopolymer ein Styren-Isopren-Styren-Isopren-Styren-Pentablockcopolymer ist, das einen Styrengehalt innerhalb eines Bereichs von von 10 bis 50 Gewichtsprozent auf der Basis des Blockcopolymergewichts aufweist.

10. Blockcopolymer gemäß Anspruch 9, wobei der Styrengehalt weniger als 45 Gewichtsprozent auf der Basis des Blockcopolymergewichts beträgt.

11. Blockcopolymer gemäß Anspruch 9, wobei der Styrengehalt mindestens 15 Gewichtsprozent auf der Basis des Blockcopolymergewichts beträgt.

12. Blockcopolymer gemäß einem der vorhergehenden Ansprüche, wobei die minimale Kapillarspinntemperatur innerhalb eines Bereichs von 130° Celsius bis 229° Celsius liegt.

13. Blockcopolymer gemäß Anspruch 3, wobei das Blockcopolymer eine Molekülmasse innerhalb eines Bereichs von von 50 000 bis 90 000 aufweist, wobei beide Endwerte des Bereichs innerhalb des Bereichs eingeschlossen sind.

14. Blockcopolymer gemäß Anspruch 13, wobei der Molekülmassenbereich von 60 000 bis 80 000 beträgt.

15. Blockcopolymer gemäß Anspruch 9, wobei das Blockcopolymer eine Molekülmasse aufweist, die in einen Bereich von von 70 000 bis 200 000 fällt, wobei beide Endwerte des Bereichs innerhalb des Bereichs eingeschlossen sind.

16. Blockcopolymer gemäß Anspruch 15, wobei der Molekülmassenbereich von 90 000 bis 110 000 beträgt.

17. Blockcopolymer gemäß Anspruch 3, wobei der Schmelzdurchfluss weniger als 5000 Dezigramm pro Minute beträgt.

18. Blockcopolymer gemäß Anspruch 17, wobei der Schmelzdurchfluss weniger als 3000 Dezigramm pro Minute beträgt.

19. Blockcopolymer gemäß Anspruch 3, wobei die Viskosität bei Spinbondingtemperatur in einen Bereich von von 200 Poise (20 Pascalsekunden) bis 1500 Poise (150 Pascalsekunden) fällt, wobei beide Endwerte des Bereichs in dem Bereich eingeschlossen sind.

20. Blockcopolymer gemäß Anspruch 9, wobei die Viskosität bei Spinbondingtemperatur in einen Bereich von von 200 Poise (20 Pascalsekunden) bis 1000 Poise (100 Pascalsekunden) fällt, wobei beide Endwerte des Bereichs in dem Bereich eingeschlossen sind.

21. Blockcopolymer gemäß Anspruch 1, wobei das Blockcopolymer ausgewählt ist aus der Gruppe, bestehend aus Styren-Isopren-Styren-Isopren-Tetrablockcopolymeren, Styren-Isopren-Styren-Isopren-Styren-Isopren-Hexablockcopolymeren und Styren-Isopren-Blockcopolymeren mit mindestens vier Styrenblöcken und mindestens drei Isoprenblöcken.

22. Blockcopolymer gemäß Anspruch 21, wobei das Blockcopolymer nicht mehr als 7 Styrenblöcke und nicht mehr als 5 Isoprenblöcke enthält.

23. Eine Polymermischungszusammensetzung, die das Blockcopolymer gemäß einem der Ansprüche 1 bis 22 in Kombination mit einem Polymer, das ausgewählt ist aus der Gruppe, bestehend aus Polyolefinen (zum Beispiel), Polystyren, thermoplastischen Polyurethanen, Polycarbonaten, Polyamiden, Polyethern, Polyvinylchloridpolymeren, Polyvinylidenchloridpolymeren und Polyesterpolymeren, beinhaltet.

24. Polymermischungszusammensetzung gemäß Anspruch 23, wobei das Polymer ein Polyolefin ist, ausgewählt aus Ethylen/Styren-Interpolymeren, Ethylen-alpha-Olefin-Interpolymeren, wobei das Alpha-Olefin 3 oder mehr Kohlenstoffatome einschließt, Polypropylen, einem verbesserten ("enhanced") Polypropylenpolymer, einem homogen verzweigten Ethylenpolymer, einem im Wesentlichen linearen Ethyleninterpolymer, einem Polyolefinelastomer oder einem Polyolefinplastomer. MURG * 119961

## Revendications

1. Un copolymère séquencé contenant des séquences alternées de monoalcényl arène polymérisé et d'isoprène polymérisé, le copolymère séquencé ayant au moins deux séquences de monoalcényl arène polymérisé, un indice de fluidité à chaud, tel que déterminé par ASTM D 1238 (200 °C, poids de 5 kilogrammes) de plus de 40 décigrammes par minute, une température de filage capillaire minimum qui est inférieure ou égale à sa température de dégradation et inférieure ou égale à 230 °C, et qui dépasse sa température de liaison au filage d'au moins un degré centigrade, et une viscosité à la température de filage capillaire minimum ne faisant pas plus de 1 500 poises (150 pascal-secondes).

2. Le copolymère séquencé de la revendication 1 dans lequel le monoalcényl arène est le styrène.

3. Le copolymère séquencé de la revendication 2, le copolymère séquencé étant un copolymère triséquencé styrène-isoprène-styrène qui a une teneur en styrène comprise dans une gamme allant de 10 pour cent en poids à moins de 40 pour cent en poids, rapportée au poids du copolymère séquencé, les deux extrémités de la gamme étant incluses dans cette gamme.

4. Le copolymère séquencé de la revendication 3, dans lequel la teneur en styrène est inférieure à 38 pour cent en poids, rapportée au poids du copolymère séquencé.

5. Le copolymère séquencé de la revendication 3, dans lequel la teneur en styrène est inférieure à 37 pour cent en poids, rapportée au poids du copolymère séquencé.

6. Le copolymère séquencé de la revendication 3, dans lequel la teneur en styrène est inférieure à 35 pour cent en poids, rapportée au poids du copolymère séquencé.

7. Le copolymère séquencé de la revendication 3, dans lequel la teneur en styrène est supérieure à 14 pour cent en poids, rapportée au poids du copolymère séquencé.

8. Le copolymère séquencé de la revendication 3, dans lequel la teneur en styrène est supérieure à 15 pour cent en poids, rapportée au poids du copolymère séquencé.

9. Le copolymère séquencé de la revendication 1, le copolymère séquencé étant un copolymère pentaséquencé styrène-isoprène-styrène-isoprène-styrène ayant une teneur en styrène comprise dans une gamme allant de 10 à 50 pour cent en poids, rapportée au poids du copolymère séquencé.

10. Le copolymère séquencé de la revendication 9, dans lequel la teneur en styrène est inférieure à 45 pour cent en poids, rapportée au poids du copolymère séquencé.

11. Le copolymère séquencé de la revendication 9, dans lequel la teneur en styrène est au moins 15 pour cent en poids, rapportée au poids du copolymère séquencé.

12. Le copolymère séquencé de l'une quelconque des revendications précédentes, dans lequel la température de filage capillaire minimum est comprise dans une gamme allant de 130° centigrade à 229° centigrade.

13. Le copolymère séquencé de la revendication 3, le copolymère séquencé ayant un poids moléculaire compris dans une gamme allant de 50 000 à 90 000, les deux extrémités de la gamme étant incluses dans cette gamme.

14. Le copolymère séquencé de la revendication 13, dans lequel la gamme de poids moléculaires va de 60 000 à 80 000.

15. Le copolymère séquencé de la revendication 9, le copolymère séquencé ayant un poids moléculaire qui tombe dans une gamme allant de 70 000 à 200 000, les deux extrémités de la gamme étant incluses dans cette gamme.

16. Le copolymère séquencé de la revendication 15, dans lequel la gamme de poids moléculaires va de 90 000 à 110 000.

17. Le copolymère séquencé de la revendication 3, dans lequel l'indice de fluidité est inférieur à 5 000 décigrammes par minute.

18. Le copolymère séquencé de la revendication 17, dans lequel l'indice de fluidité est inférieur à 3 000 décigrammes par minute.

19. Le copolymère séquencé de la revendication 3, dans lequel la viscosité à la température de liaison au filage tombe dans une gamme allant de 200 poises (20 pascal-secondes) à 1 500 poises (150 pascal-secondes), les deux extrémités de la gamme étant incluses dans cette gamme.

20. Le copolymère séquencé de la revendication 9, dans lequel la viscosité à la température de liaison au filage tombe dans une gamme allant de 200 poises (20 pascal-secondes) à 1 000 poises (100 pascal-secondes), les deux extrémités de la gamme étant incluses dans cette gamme.

21. le copolymère séquencé de la revendication 1, dans lequel le copolymère séquencé est sélectionné dans le groupe consistant en copolymères tétraséquencés styrène-isoprène-styrène-isoprène, copolymères hexaséquencés styrène-isoprène-styrène-isoprène-styrène-isoprène, et copolymères séquencés styrène-isoprène ayant au moins quatre séquences de styrène et au moins trois séquences d'isoprène.

22. Le copolymère séquencé de la revendication 21, le copolymère séquencé ne contenant pas plus de 7 séquences de styrène et pas plus de 5 séquences d'isoprène.

23. Une composition de mélange de polymères comprenant le copolymère séquencé de l'une quelconque des revendications 1 à 22 en combinaison avec un polymère sélectionné dans le groupe consistant en polyoléfines (par exemple), polystyrène, polyuréthanes thermoplastiques, polycarbonates, polyamides, polyéthers, polymères chlorure de polyvinyle, polymères chlorure de polyvinylidène, et polymères polyester.

24. La composition de mélange de polymères de la revendication 3, dans laquelle le polymère est une polyoléfine sélectionnée parmi les interpolymères éthylène/styrène, interpolymères éthylène/alpha-oléfine où l'apha-oléfine inclut 3 atomes de carbone ou plus, polypropylène, un polymère polypropylène amélioré, un polymère éthylène ramifié de façon homogène, un interpolymère éthylène substantiellement linéaire, un élastomère polyoléfine ou un plastomère polyoléfine.
